(19) Europäisches Patentamt / European Patent Office / Office européen des brevets

(11) **EP 4 122 699 A1**

(12) **EUROPEAN PATENT APPLICATION**
published in accordance with Art. 153(4) EPC

(43) Date of publication:
**25.01.2023 Bulletin 2023/04**

(21) Application number: **21770861.9**

(22) Date of filing: **15.03.2021**

(51) International Patent Classification (IPC):
**B32B 9/00** (2006.01)     **G02B 5/02** (2006.01)
**B32B 7/023** (2019.01)

(52) Cooperative Patent Classification (CPC):
**B32B 7/023; B32B 9/00; G02B 5/02**

(86) International application number:
**PCT/JP2021/010462**

(87) International publication number:
**WO 2021/187445 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2020 JP 2020045862**

(71) Applicant: **NIPPON SHEET GLASS COMPANY, LIMITED**
**Tokyo 108-6321 (JP)**

(72) Inventors:
• **IWAI, Nobuki**
  **Tokyo 108-6321 (JP)**
• **KAMITANI, Kazutaka**
  **Tokyo 108-6321 (JP)**

(74) Representative: **Cabinet Beau de Loménie**
**158, rue de l'Université**
**75340 Paris Cedex 07 (FR)**

(54) **ANTIGLARE FILM-EQUIPPED TRANSPARENT BASE MATERIAL**

(57) Provided is an antiglare film-attached transparent substrate that is suitably disposed on an image display side of an image display apparatus. An antiglare film-attached transparent substrate 100 includes: a transparent substrate 10; and an antiglare film 20 disposed on the transparent substrate 10. The antiglare film 20 contains particles and a matrix 2. The particles are, for example, flat-plate-shaped particles 1 in which a thickness is in a range of 0.3 nm to 3 nm and an average diameter of principal surfaces of the particles is in a range of 10 nm to 1000 nm. The matrix 2 contains silicon oxide. The principal surfaces of the flat-plate-shaped particles 1 may be disposed substantially parallel to a principal surface of the transparent substrate 10 in the antiglare film 20.

FIG.1

EP 4 122 699 A1

**Description**

TECHNICAL FIELD

The present invention relates to an antiglare film-attached transparent substrate, and particularly relates to an antiglare film-attached transparent substrate that is suitably used in combination with an image display apparatus.

BACKGROUND ART

A transparent substrate such as a glass sheet disposed on an image display side of an image display apparatus such as a liquid crystal display apparatus may have an antiglare function in order to reduce specular reflection of ambient light. The antiglare function can be exhibited by minute unevenness. The antiglare function is evaluated by using gloss as an index such that the less the value is, the more excellent the antiglare function is. Meanwhile, light scattering generated by the minute unevenness is evaluated by haze. The haze is preferably low in order not to degrade clarity of a displayed image.

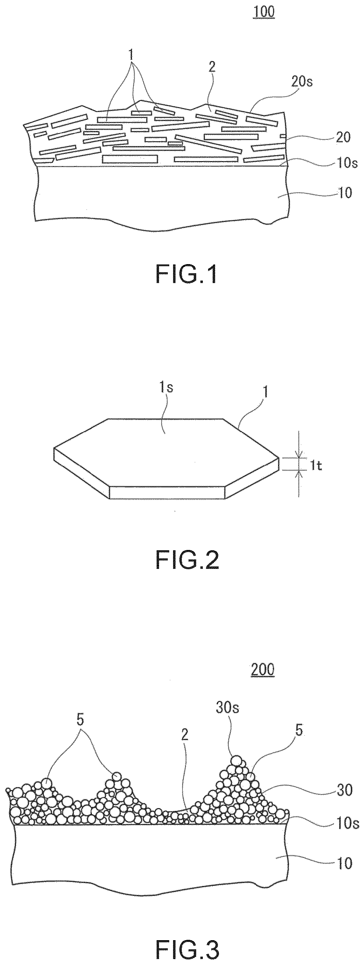

A technique of forming, on a transparent substrate, a film having minute unevenness on a surface and imparting the antiglare function has been known. Patent Literature 1 discloses an antiglare film-attached substrate in which an antiglare film including two kinds of particles and a silica-based matrix is formed on a glass sheet. The antiglare film contains first particles and second particles, and a ratio of the mass of the second particles to the mass of the first particles is in a range of 0.5 to 4 (paragraph 0038). The average aspect ratio of the first particles is 10 to 80, and the first particle typically has a plate-like shape. The average aspect ratio of the second particles is 1 to 5, and the second particle typically has a spherical shape. In this film, the specific orientation of the first particles is hindered due to the second particles being present, and the first particles are randomly oriented with respect to the principal surface of the glass sheet (FIG. 2).

CITATION LIST

Patent Literature

Patent Literature 1: JP 2017-134094 A

SUMMARY OF INVENTION

Technical Problem

Patent Literature 1 discloses the technique on the assumption that the technique is used for solar cell modules and the like as well as image display apparatuses. Therefore, the technique is not optimized for use in combination with an image display apparatus. The present invention has been made in view of such circumstances, and an object of the present invention is to provide a novel antiglare film-attached transparent substrate that is suitably used on an image display side of an image display apparatus.

Solution to Problem

The present invention provides an antiglare film-attached transparent substrate that includes

a transparent substrate and an antiglare film disposed on the transparent substrate, and, in the antiglare film-attached transparent substrate,
the antiglare film contains particles and a matrix, and
the matrix contains silicon oxide.

According to a first embodiment of the present invention,

an antiglare film-attached transparent substrate includes
a transparent substrate, and an antiglare film disposed on the transparent substrate, and, in the antiglare film-attached transparent substrate,
the antiglare film contains particles and a matrix,
the particles are substantially formed of flat-plate-shaped particles,
a thickness of each of the flat-plate-shaped particles is in a range of 0.3 nm to 3 nm, and an average diameter of principal surfaces of the flat-plate-shaped particles is in a range of 10 nm to 1000 nm,

the matrix contains silicon oxide, and

the principal surfaces of the flat-plate-shaped particles are disposed substantially parallel to a principal surface of the transparent substrate in the antiglare film.

According to a second embodiment of the present invention,

an antiglare film-attached transparent substrate includes

a transparent substrate, and an antiglare film disposed on the transparent substrate, and, in the antiglare film-attached transparent substrate,

the antiglare film contains particles and a matrix,

the particles are substantially formed of phyllosilicate mineral particles,

the matrix contains silicon oxide, and

in phyllosilicate mineral contained in the phyllosilicate mineral particles in the antiglare film,

a crystal plane oriented along a principal surface of the transparent substrate is a (001) plane.

According to a third embodiment of the present invention,

an antiglare film-attached transparent substrate includes

a transparent substrate, and an antiglare film disposed on the transparent substrate, and, in the antiglare film-attached transparent substrate,

the antiglare film contains particles and a matrix, and

the matrix contains silicon oxide and a nitrogen atom.

According to a fourth embodiment of the present invention,

an antiglare film-attached transparent substrate includes

a transparent substrate, and an antiglare film disposed on the transparent substrate, and, in the antiglare film-attached transparent substrate

the antiglare film contains particles and a matrix,

the matrix contains silicon oxide, and

the antiglare film incudes a first region in which the particles are stacked in a thickness direction of the film, and a valley-shaped second region that surrounds the first region or that is surrounded by the first region.

Advantageous Effects of Invention

The present invention can provide an antiglare film-attached transparent substrate that is suitable for allowing image display of an image display apparatus to be favorably viewed.

BRIEF DESCRIPTION OF THE DRAWINGS

FIG. 1 is a cross-sectional view of an example of an antiglare film-attached transparent substrate according to first and second embodiments of the present invention;

FIG. 2 is a perspective view of an example of a flat-plate-shaped particle;

FIG. 3 is a cross-sectional view of an example of an antiglare film-attached transparent substrate according to a third embodiment of the present invention;

FIG. 4 is a cross-sectional view of an example of the antiglare film-attached transparent substrate according to the third embodiment of the present invention;

FIG. 5 is a cross-sectional view of an example of an antiglare film-attached transparent substrate according to a fourth embodiment of the present invention;

FIG. 6 is a cross-sectional view of an example of the antiglare film-attached transparent substrate according to the fourth embodiment of the present invention;

FIG. 7 is a cross-sectional view schematically illustrating a cross-section of a protrusion of a film of the antiglare film-attached transparent substrate according to the fourth embodiment of the present invention;

FIG. 8 illustrates a scanning electron microscope (SEM) photograph of an example of an antiglare film-attached transparent substrate according to Example 1 (first and second embodiments);

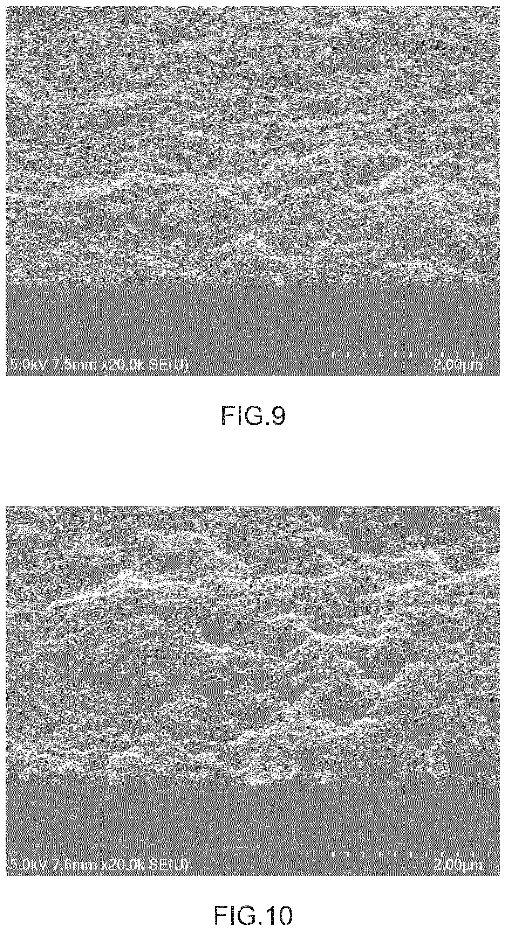

FIG. 9 illustrates an SEM photograph of an example of an antiglare film-attached transparent substrate of Example 4 (third embodiment);
FIG. 10 illustrates an SEM photograph of an example of an antiglare film-attached transparent substrate of Example 5 (third embodiment);

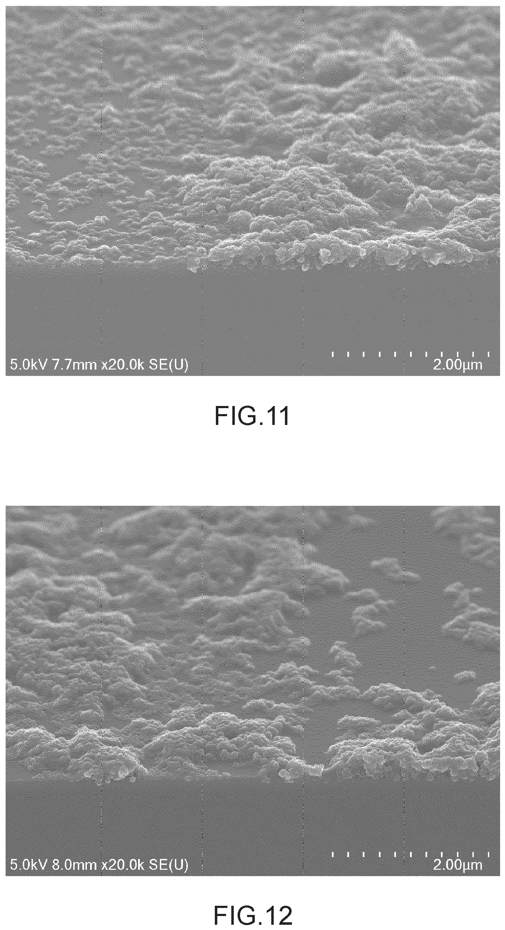

FIG. 11 illustrates an SEM photograph of an example of an antiglare film-attached transparent substrate of Example 6 (third embodiment);
FIG. 12 illustrates an SEM photograph of an example of an antiglare film-attached transparent substrate of Example 7 (third embodiment);
FIG. 13 illustrates an SEM photograph of an example of an antiglare film-attached transparent substrate of Example 8 (fourth embodiment);
FIG. 14 illustrates an enlarged SEM photograph of an example of the antiglare film-attached transparent substrate of Example 8 (fourth embodiment); and
FIG. 15 illustrates a laser microscope photograph of an example of the antiglare film-attached transparent substrate of Example 8 (fourth embodiment).

DESCRIPTION OF EMBODIMENTS

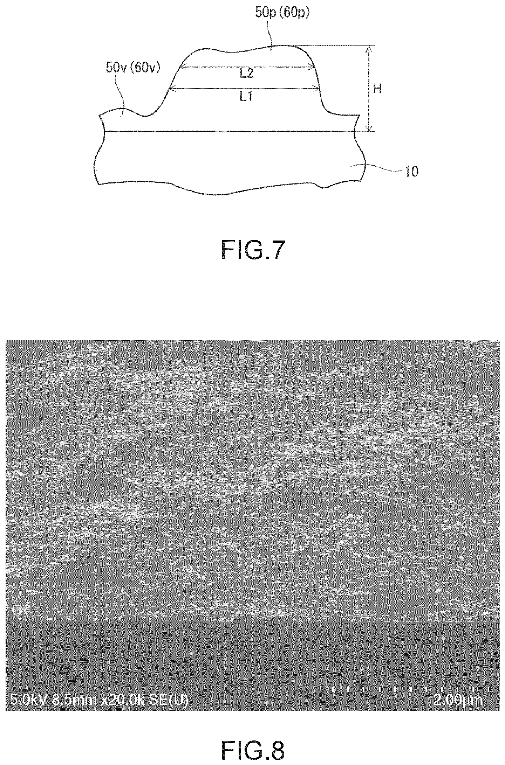

Embodiments of the present invention will be described below. The following description is not intended to limit the present invention to specific embodiments. In the description herein, "substantially parallel" means that an angle between two subject surfaces is preferably less than or equal to 30°, more preferably less than or equal to 20°, and particularly preferably less than or equal to 10°. "Main component" means that the content is preferably greater than or equal to 50% by mass and more preferably greater than or equal to 80% by mass. "Substantially formed of" means that the content is preferably greater than or equal to 80% by mass, more preferably greater than or equal to 90% by mass, and particularly preferably greater than or equal to 95% by mass. "Principal surface" of a substrate represents a front surface and a rear surface other than side surfaces, and more specifically represents a surface on which a film is formed. "Principal surface" of a flat-plate-shaped particle has a similar meaning, and represents a pair of front and rear surfaces of the flat-plate-shaped particle. The definition of "plateau-shaped" will be described below with reference to FIG. 7.

[First and second embodiments]

FIG. 1 illustrates a cross-section of an antiglare film-attached transparent substrate according to the present embodiments. An antiglare film-attached transparent substrate 100 includes a transparent substrate 10, and an antiglare film 20 disposed on the transparent substrate 10. In FIG. 1, the antiglare film 20 is formed directly on a principal surface 10s of the transparent substrate 10. However, another film may be disposed between the transparent substrate 10 and the antiglare film 20. The antiglare film 20 contains particles 1 and a matrix 2. The antiglare film 20 may contain voids. The voids may exist in the matrix 2 or exist in contact with the particles 1 and the matrix 2.

(Particle)

The particles 1 may be flat-plate-shaped particles. The particles 1 may be substantially formed of flat-plate-shaped particles. However, a part of the particles 1 may have shapes other than flat-plate-like shapes, for example, have spherical shapes. The shapes, and a preferable average particle diameter and material of the spherical particles are as described for a third embodiment. The particles 1 may be merely formed of flat-plate-shaped particles without containing spherical particles and the like. FIG. 2 illustrates an example of the particle 1 that is a flat-plate-shaped particle. The particle 1 has a pair of principal surfaces 1s. The paired principal surfaces 1s are substantially parallel to each other. The principal surface 1s can be substantially flat. However, stepped portions or minute unevenness may exist in the principal surface 1s. A particle obtained by connecting spherical silicon oxide particles has a chain-like outer shape and does not have a flat-plate-like shape, and does not correspond to the flat-plate-shaped particle.

A thickness 1t of the particle 1 corresponds to a distance between the paired principal surfaces 1s, and is in a range of 0.3 nm to 3 nm. The thickness 1t is preferably greater than or equal to 0.5 nm and more preferably greater than or equal to 0.7 nm, and is preferably less than or equal to 2 nm and more preferably less than or equal to 1.5 nm. In a case where the thickness 1t varies depending on a portion, the thickness 1t may be determined as an average of the greatest thickness and the smallest thickness.

An average diameter d of the principal surface 1s of the particle 1 is in a range of 10 nm to 1000 nm. The average diameter d of the principal surface is preferably greater than or equal to 20 nm and more preferably greater than or equal to 30 nm. The average diameter d is preferably less than or equal to 700 nm and more preferably less than or equal to 500 nm. The average diameter d of the principal surface 1s can be determined as an average of the greatest value and the smallest value of diameters passing through the centroid of the principal surface 1s.

The average aspect ratio of the particles 1 can be calculated by d/t. The average aspect ratio is, but is not particularly limited to, preferably greater than or equal to 30 and more preferably greater than or equal to 50. The average aspect ratio may be preferably less than or equal to 1000 and more preferably less than or equal to 700.

The particles 1 may be phyllosilicate mineral particles. A phyllosilicate mineral contained in the phyllosilicate mineral particles is also referred to as sheet silicate mineral. Examples of the phyllosilicate mineral include: kaolin minerals such as kaolinite, dickite, nacrite, and halloysite; serpentine such as chrysotile, lizardite, and amesite; dioctahedral smectite such as montmorillonite and beidellite; trioctahedral smectite such as saponite, hectorite, and sauconite; dioctahedral mica such as muscovite, paragonite, illite, and celadonite; trioctahedral mica such as phlogopite, annite, and lepidolite; dioctahedral brittle mica such as margarite; trioctahedral brittle mica such as clintonite and anandite; dioctahedral chlorite such as donbassite; 2·3 octahedral chlorite such as cookeite and sudoite; trioctahedral chlorite such as clinochlore and chamosite; pyrophyllite; talc; dioctahedral vermiculite; and trioctahedral vermiculite. The phyllosilicate mineral particles preferably contain a mineral belonging to smectite, kaolin, or talc. As the mineral belonging to smectite, montmorillonite is preferable. Montmorillonite belongs to monoclinic system, kaolin belongs to triclinic system, and talc belongs to monoclinic system or triclinic system.

In the antiglare film 10, the principal surface 1s of the particle 1 is disposed substantially parallel to the principal surface 10s of the transparent substrate 10. In a case where the percentage of the particles 1 disposed substantially parallel to the principal surface 10s is greater than or equal to 80%, more preferably greater than or equal to 85%, and particularly preferably greater than or equal to 90% in terms of the number, the principal surface 1s is regarded as being disposed substantially parallel to the principal surface 10s as a whole even if the remaining particles 1 are not disposed substantially parallel to the principal surface 10s. In order to determine this, it is preferable that disposition of 30 flat-plate-shaped particles and preferably 50 flat-plate-shaped particles is checked.

In a case where the particles 1 are phyllosilicate mineral particles, the crystal plane of the phyllosilicate mineral which is oriented along the principal surface 10s of the transparent substrate 10 may be the (001) plane. The plane orientation can be confirmed through X-ray diffraction analysis.

(Matrix)

The matrix 2 contains silicon oxide that is an oxide of Si, and preferably contains silicon oxide as a main component. The matrix 2 containing silicon oxide as a main component is suitable for reducing a refractive index of the film and reducing reflectance of the film. The matrix 2 may contain a component other than silicon oxide and may contain a component partially containing silicon oxide.

The component partially containing silicon oxide is, for example, a component which contains a moiety formed by a silicon atom and an oxygen atom, and in which an atom other than a silicon atom and an oxygen atom, a functional group, or the like is bound to the silicon atom or the oxygen atom in this moiety. Examples of the atom other than a silicon atom and an oxygen atom include a nitrogen atom, a carbon atom, a hydrogen atom, and metal element described in the subsequent paragraph. Examples of the functional group include an organic group represented as R in the subsequent paragraph. Such a component is not strictly silicon oxide since the component is not merely formed of a silicon atom and an oxygen atom. However, in order to describe the characteristics of the matrix 2, it is proper to handle, as "silicon oxide", the silicon oxide moiety formed of a silicon atom and an oxygen atom, and this also matches the common practice in this field. In the description herein, the silicon oxide moiety is also handled as silicon oxide. As is apparent from the above description, an atomic ratio between the silicon atoms and the oxygen atoms in the silicon oxide may not necessarily be stoichiometric (1:2).

The matrix 2 may contain a metal oxide other than silicon oxide, specifically, may contain a metal oxide component or a metal oxide moiety containing matter other than silicon. The metal oxide that can be contained in the matrix 2 is, but is not particularly limited to, for example, an oxide of at least one metal element selected from the group consisting of Ti, Zr, Ta, Nb, Nd, La, Ce, and Sn. The matrix 2 may contain an inorganic compound component other than an oxide, for example, may contain nitride, carbide, halide, or the like. The matrix 2 may contain an organic compound component.

The metal oxide such as silicon oxide can be formed from a hydrolyzable organic metal compound. Examples of a hydrolyzable silicon compound include compounds represented by formula (1).

$$R_nSiY_{4-n} \qquad (1)$$

R represents an organic group including at least one selected from an alkyl group, a vinyl group, an epoxy group, a styryl group, a methacryloyl group, and an acryloyl group. Y represents a halogen atom or a hydrolyzable organic group that is at least one selected from an alkoxy group, an acetoxy group, an alkenyloxy group, and an amino group. The halogen atom is preferably Cl. n represents an integer of 0 to 3, and is preferably 0 or 1.

R preferably represents an alkyl group, for example, a C1 to C3 alkyl group and particularly preferably represents a methyl group. Y preferably represents an alkoxy group, for example, a C1 to C 4 alkoxy group, and a methoxy group and an ethoxy group are particularly preferable. Two or more of the compounds represented by the above-described formula may be used in combination. Examples of such a combination include a combination of tetraalkoxysilane in which n represents 0 and monoalkyltrialkoxysilane in which n represents 1.

The compound represented by formula (1) forms a network structure in which silicon atoms are bound to each other via an oxygen atom after hydrolysis and polycondensation. In this structure, the organic group represented by R is contained in a state of being bound directly to the silicon atom.

(Antiglare film)

A ratio of the particles 1 to the matrix 2 in the antiglare film 20 is, for example, 0.05 to 10, preferably 0.05 to 7, and more preferably 0.05 to 5 in terms of mass. A volume ratio of voids in the antiglare film 20 may be, but is not particularly limited to, greater than or equal to 10% and more preferably 10 to 20%. Voids may not necessarily be present.

A film thickness of the antiglare film 20 is, but is not particularly limited to, for example, 50 nm to 1000 nm, more preferably 100 nm to 700 nm, and particularly preferably 100 nm to 500 nm from the viewpoint of, for example, properly obtaining antiglare properties with ease. In order to allow the principal surfaces of flat-plate-shaped particles to be oriented substantially parallel to the substrate, the film thickness of the antiglare film 20 is preferably less than or equal to the above-described upper limit. The tendency of randomly orienting the flat-plate-shaped particles is enhanced in a thick film.

A surface 20s of the antiglare film 20 preferably has minute unevenness. However, the orientation of the particles 1 along the principal surface 10s of the transparent substrate 10 inhibits development of the unevenness of the surface 20s. A first preferable surface roughness of the surface 20s is represented by Ra, and is preferably 20 nm to 120 nm, more preferably 30 nm to 110 nm, and even more preferably 40 nm to 100 nm. A second preferable surface roughness is represented by Ra, and is preferably 80 nm to 500 nm, more preferably 100 nm to 400 nm, and even more preferably 100 nm to 300 nm. Ra represents an arithmetic average roughness of a roughness profile as defined in JIS B0601:2001. In a case where particles are randomly oriented as in Patent Literature 1, Ra indicates a value greater than values in the above-described range.

Rsm of the surface 20s is greater than 0 $\mu$m and is less than or equal to 35 $\mu$m, more preferably 1 $\mu$m to 30 $\mu$m, and even more preferably 2 $\mu$m to 20 $\mu$m. Rsm represents an average length of roughness profile elements as defined in JIS B0601:2001. When Rsm is not excessively great, so-called sparkle is preferably reduced.

The sparkle represents a bright spot generated depending on relationship between the minute unevenness for imparting the antiglare function and a pixel size of an image display apparatus. The sparkle is observed as irregular light fluctuation according to shift of relative positions between a viewpoint of a user and an image display apparatus. The sparkle has become more significant according to enhancement of preciseness of the image display apparatus. The antiglare film 20 having Ra and Rsm in the above-described ranges is particularly suitable for reducing the gloss and haze in a well-balanced manner while reducing the sparkle.

(Transparent substrate)

As the transparent substrate 10, a resin sheet or a glass sheet is suitable. The glass of the glass sheet may be general-purpose soda-lime glass or the other glass such as borosilicate glass, aluminosilicate glass, or alkali-free glass. The glass sheet may be a glass sheet formed by a known production method such as a float method or a down-draw method. By such a production method, a glass sheet having a smooth surface can be obtained. The glass sheet may have unevenness on the principal surface, and may be, for example, figured glass. The figured glass can be formed by a production method called a roll-out method. The figured glass produced by this production method has cyclic unevenness in one direction along the principal surface of the glass sheet, in general.

As the resin sheet, for example, an acrylic resin sheet typified by a polymethyl methacrylate sheet or polycarbonate sheet is suitable. Similarly to the glass sheet, the resin sheet may also have unevenness on the principal surface while having a smooth principal surface. In order to impart the unevenness, surface treatment may be performed on the resin sheet. Examples of the surface treatment include oxidation treatment such as corona discharge treatment, plasma treatment, chromic acid treatment (wet), flame treatment, hot air treatment, and ozone/ultraviolet irradiation, sandblasting, and solvent treatment.

Although a thickness of the transparent substrate 10 is not particularly limited, the transparent substrate 10 is preferably thin in a case where the weight is to be reduced. The thickness of the transparent substrate 10 is, for example, 0.4 mm to 5 mm, preferably 0.3 mm to 5 mm, more preferably 0.5 to 3 mm and 0.4 to 3 mm, and particularly preferably 0.6 to 2.5 mm and 0.5 to 2.5 mm. Ra of the principal surface 10s of the transparent substrate 10 may be preferably less than or equal to 10 nm, more preferably less than or equal to 5 nm, even more preferably less than or equal to 2 nm, and particularly preferably less than or equal to 1 nm. In this case, an antiglare effect is significantly exhibited by the antiglare film 20.

Although the transparent substrate 10 may be a flat plate in general, the transparent substrate 10 may be a curved plate. Particularly, in a case where an image display surface of an image display apparatus to be used in combination has a non-flat surface such as a curved surface, the transparent substrate 10 preferably has a non-flat-surface-shaped principal surface corresponding thereto. In this case, the entirety of the transparent substrate 10 may be bent with a constant curvature, or may be locally bent. The principal surface 10s of the transparent substrate 10 may be, for example, formed by connecting a plurality of planes to each other at the curved surfaces. A curvature radius of the transparent substrate 10 is, for example, less than or equal to 5000 mm. The curvature radius is, for example, greater than or equal to 10 mm. However, in particular, the curvature radius may be less than that at a locally bent portion, and is, for example, greater than or equal to 1 mm.

The antiglare film 20 may be formed so as to cover the entirety of the principal surface 10s of the transparent substrate 10 or cover a part of the surface 10s. In the latter case, the antiglare film 20 may be formed in at least a portion of the principal surface 10s which covers an image display surface of an image display apparatus.

In a case where the transparent substrate 10 is a glass sheet, the glass sheet is preferably strengthened glass. The strengthening treatment of a glass sheet includes thermal tempering and chemical strengthening, and chemical strengthening treatment is suitable for a thin glass sheet. In the chemical strengthening treatment, a glass sheet is immersed in molten salt containing alkali metal ions at a temperature lower than or equal to a strain point of glass of the glass sheet, and alkali metal ions (for example, sodium ions) in a surface layer of the glass sheet are exchanged for alkali metal ions (for example, potassium ions) having relatively large ion radii to generate compressive stress on the surface layer of the glass sheet. The chemical strengthening treatment for the glass sheet may be performed before or after the antiglare film is formed. Thermal tempering can also be performed by a known method.

(Optical characteristics)

Gloss can be evaluated by specular glossiness. 60° specular glossiness of the transparent substrate 10 is, for example, preferably 60 to 130%, more preferably 70 to 120%, and particularly preferably 80 to 110% and 85 to 100%. Hereinafter, "%" of the value of the gloss may be omitted. The specular glossiness represents a value measured for the surface 10s on which the antiglare film 20 is formed. A haze ratio of the transparent substrate is, for example, preferably less than or equal to 20%, more preferably less than or equal to 15%, and particularly preferably less than or equal to 10%, and may be 1 to 8%, more preferably 1 to 6%, and particularly preferably 1 to 5% depending on cases.

The 60° specular glossiness G and the haze ratio H (%) preferably satisfy a relational expression (a), more preferably satisfy a relational expression (b), and even more preferably satisfy a relational expression (c). G and H may satisfy a relational expression (d).

$$H \leq -0.2G + 25 \quad \text{(a)}$$

$$H \leq -0.2G + 24.5 \quad \text{(b)}$$

$$H \leq -0.2G + 24 \quad \text{(c)}$$

$$H \leq -0.15G + 18 \quad \text{(d)}$$

The gloss can be measured in accordance with "Method 3 (60° specular gloss)" in "Specular glossiness-Methods of measurement" of JIS Z8741-1997, and the haze can be measured in accordance with JIS K7136:2000.

[Third embodiment]

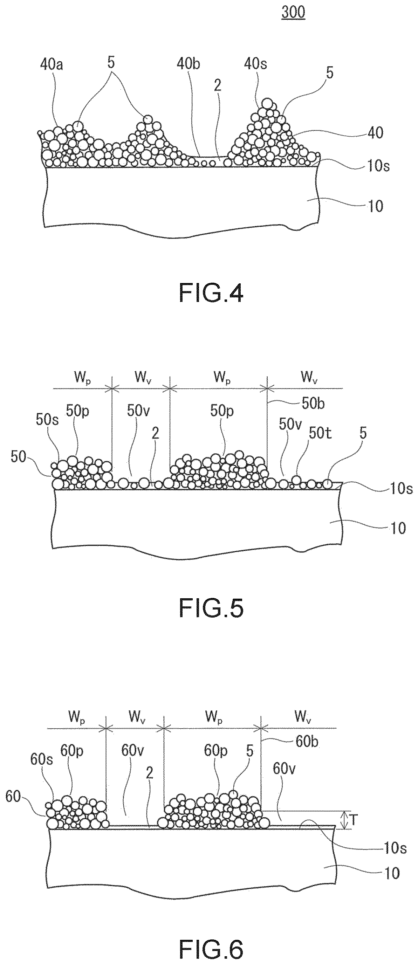

FIG. 3 illustrates a cross-section of an example of an antiglare film-attached transparent substrate according to the present embodiment. FIG. 4 illustrates a cross-section of another example of an antiglare film-attached transparent substrate according to the present embodiment. Antiglare film-attached transparent substrates 200 and 300 include the transparent substrates 10, and antiglare films 30 and 40 disposed on the transparent substrates 10. In FIGS. 3 and 4, the antiglare films 30 and 40 are each formed directly on the principal surface 10s of the transparent substrate 10. However, another film may be disposed between the transparent substrate 10 and each of the antiglare films 30 and 40. The antiglare films 30 and 40 each contain the particles 5 and the matrix 2. The antiglare films 30 and 40 may contain voids. The voids may exist in the matrix 2 or exist in contact with the particles 5 and the matrix 2.

In the entire region of the antiglare film 30, the particles 5 are stacked in the film thickness direction. Meanwhile, the antiglare film 40 includes a region 40a in which the particles 5 are stacked in the film thickness direction and a region 40b in which the particles 5 are not stacked in the film thickness direction or the particles 5 do not exist. The region 40b may be a region having a surface 40s which is substantially parallel to the principal surface 10s of the transparent substrate 10 and at which the particles 5 are not exposed, instead of a region in which the particles 5 are not stacked in the film thickness direction or the particles 5 do not exist. The region 40b may extend, for example, preferably over 0.25 $\mu m^2$ or more, more preferably over 0.5 $\mu m^2$ or more, and particularly preferably over 1 $\mu m^2$ or more. In at least a part of the antiglare film 30 and the region 40a of the antiglare film 40, the particles 5 are stacked up to a height that is greater than or equal to 5 times the average particle diameter of the particles 5, and more preferably greater than or equal to 7 times the average particle diameter thereof.

(Particles)

The shape of the particle 5 is, but is not particularly limited to, preferably a spherical shape. The particles 5 may be substantially formed of spherical particles. However, a part of the particles 5 may have shapes other than spherical shapes, for example, may have flat-plate-like shapes. The particles 5 may be merely formed of spherical particles. In the description herein, the spherical particle refers to a particle in which a ratio of the longest diameter passing through the centroid to the shortest diameter passing therethrough is greater than or equal to 1 and less than or equal to 1.8, and particularly preferably greater than or equal to 1 and less than or equal to 1.5, and the surface is formed as a curved surface. The average particle diameter of the spherical particles may be preferably 5 nm to 200 nm, more preferably 10 nm to 100 nm, and particularly preferably 20 nm to 60 nm. The average particle diameter of the spherical particles is determined as the average of the particle diameters, specifically, as the average of average values between the above-described shortest diameters and longest diameters, and is preferably measured by using 30 particles, preferably by using 50 particles, based on an SEM image.

Preferable ranges of the thickness t of each of the flat-plate-shaped particles which may be partially contained in the particles 5, and the average diameter d and the aspect ratio d/t of the principal surface thereof are set as described for the first and the second embodiments.

Although a material of the particles 5 is not particularly limited, the particles 5 preferably contain metal oxide, in particular, silicon oxide. The metal oxide may contain, for example, an oxide of at least one metal element selected from the group consisting of Ti, Zr, Ta, Nb, Nd, La, Ce, and Sn.

The particles 5 can be fed to the antiglare films 30 and 40 from a dispersion liquid of the particles 5. In this case, a dispersion liquid in which each particle 5 is independently dispersed is preferably used. As compared with a dispersion liquid in which particles are connected in a chain-like manner, a dispersion liquid in which particles are not aggregated is suitably used in order to achieve a preferable aggregated state of particles in the antiglare films 30 and 40. The particles 5 that are independent from each other are easily moved according to volatilization of liquid such as a dispersion medium, and are easily aggregated so as to be suitable for achieving preferable characteristics in the film.

(Matrix)

The matrix 2 is as described for the first and second embodiments. However, in the third embodiment, the matrix 2 preferably contains a nitrogen atom. The nitrogen atom is preferably contained as a part of an organic compound component or a functional group, in particular, a part of a nitrogen-atom-containing functional group. The nitrogen-atom-containing functional group is preferably an amino group. Particularly, the nitrogen atom can be a part of functional groups having high reactivity in a material for forming a matrix that contains, as a main component, metal oxide such as silicon oxide. Such a functional group can contribute to promoting aggregation of the particles 5 in film formation to aggregate the particles 5 in a preferable aggregated state.

The metal oxide such as silicon oxide can be formed from a hydrolyzable organic metal compound. Examples of the hydrolyzable silicon compound include compounds represented by formula (1).

The nitrogen atom can also be fed to the antiglare films 30 and 40 from a compound containing silicon atoms, specifically from an amino-group-containing silane coupling agent. This compound can be represented by, for example, formula (2).

$$A_k B_m SiY_{4-k-m} \qquad (2)$$

A represents an organic group containing an amino group. The amino group may be any of primary, secondary, and tertiary amino groups. A represents, for example, an amino-group-containing hydrocarbon, and preferably represents an alkyl group or an alkenyl group in which amino groups are substituted for a part of the atoms, more preferably represents an alkyl group or an alkenyl group in which an amino group is substituted for a hydrogen atom, and particularly preferably represents an alkyl group or an alkenyl group having an amino group at its terminal. Each of the alkyl group and the alkenyl group may have either a linear chain form or a branched form. Preferable specific examples of A include ω-aminoaikyl group having an amino group at a terminal of an alkyl group, and N-ω'-(aminoalkyl)-ω-aminoalkyl group in which a hydrogen atom of the amino group is substituted by another aminoalkyl group. A preferably contains a carbon atom as an atom connecting to the silicon atom. In this case, a hydrocarbon group typified by an alkyl group and an alkenyl group can be disposed between the nitrogen atom and the silicon atom. In other words, the nitrogen atom may be bound to the silicon atom forming silicon oxide via the hydrocarbon group. A particularly preferably represents a γ-aminopropyl group or an N-(2-aminoethyl)-3-aminopropyl group.

B may represent the organic group described above as R, and may represent an alkyl group or an alkenyl group. The alkyl group or the alkenyl group may have a branched form or may include substitution for a part of hydrogen atoms in the alkyl group or the alkenyl group. B preferably represents an alkyl group having no substituted moiety, and more preferably represents a linear alkyl group, and the number of carbon atoms in the carbon chain is 1 to 3 and B even more preferably represents a methyl group. Y is as described above. k represents an integer of 1 to 3, m represents an integer of 0 to 2, and k+m represents an integer of 1 to 3. k represents 1, and m represents 0 or 1. In a case where A represents a γ-aminopropyl group, k=1 and m=0 are preferably satisfied. In a case where A represents an N-(2-aminoethyl)-3-aminopropyl group, k=1 and m=0 or 1 are preferably satisfied.

The compound represented by formula (2) forms a network structure in which silicon atoms are bound to each other via an oxygen atom after hydrolysis and polycondensation. In a case where the compound represented by formula (1) is used in combination, the compound represented by formula (2) forms a part of the network structure. In this structure, the organic group represented by A is contained in a state of being bound directly to the silicon atom.

The organic group represented by A is considered to attract particles and promote aggregation of the particles in the process of volatilizing a solvent of a coating liquid.

(Antiglare film)

A ratio of the particles 5 to the matrix 2 in each of the antiglare films 30 and 40, the film thickness of each of the antiglare films 30 and 40, Ra of each of the surfaces 30s and 40s, and Rsm of each of the surfaces 30s and 40s are not particularly limited, and may be in the range described for the first and second embodiments.

In the antiglare films 30 and 40, the particles 5 are aggregated and locally stacked, and the height of the film is increased at this portion. Meanwhile, at another portion, the particles 5 are not stacked and the film is locally thin. Difference between the highest portion and the lowest portion of each of the antiglare films 30 and 40 as measured from the principal surface 10s of the transparent substrate 10, may be preferably greater than or equal to three times the average particle diameter of the particles 5, and more preferably greater than or equal to four times the average particle diameter thereof.

In the region 40b of the antiglare film 40, the particles are not stacked in the film thickness direction or particles themselves do not exist. In the latter case, the film 40 may be merely formed of the matrix 2 in the region 40b. A proportion of the region 40b in an area of a region in which the antiglare film 40 is formed may be, for example, preferably 5 to 90%, more preferably 10 to 70%, and particularly preferably 20 to 50%.

(Transparent substrate)

The configuration of the transparent substrate 10 such as a preferable material and structure is as described above.

The antiglare films 30 and 40 may be each formed so as to cover the entirety of the principal surface 10s of the transparent substrate 10 or cover a part of the principal surface 10s. In the latter case, the antiglare films 30 and 40 may be each formed in at least a portion of the principal surface 10s which covers an image display surface of an image display apparatus.

(Optical characteristics)

Gloss can be evaluated by specular glossiness. 60° specular glossiness of the transparent substrate 10 is, for example, preferably 60 to 130%, more preferably 70 to 120%, and particularly preferably 80 to 110% and 85 to 100%. The specular glossiness represents a value measured for the surface 10s on which the antiglare film 20 is formed. The haze ratio of the transparent substrate is, for example, preferably less than or equal to 20%, more preferably less than or equal to 15%, and particularly preferably less than or equal to 10%, and may be 1 to 8%, more preferably 1 to 6%, and particularly preferably 1 to 5% depending on cases.

The 60° specular glossiness G and the haze ratio H (%) preferably satisfy the relational expression (a) and more preferably satisfy the relational expression (b).

$$H \leq -0.2G+25 \quad (a)$$

$$H \leq -0.2G+24.5 \quad (b)$$

Japanese Industrial Standards Nos. to be referred to for measuring the gloss and the haze are as described above.

(Parameter about material ratio curve)

The antiglare film-attached transparent substrates 200 and 300 can have the following characteristics concerning parameters about a material ratio curve according to ISO 25178. As defined in ISO 25178, the material ratio curve is represented by percentages obtained by accumulating frequencies at a certain height from the highest value with setting the total number of all pieces of the height data as 100. Based on the material ratio curve, a bearing area ratio at a certain height C is represented as Smr(C). Among straight lines in which difference between Smr values at two height points is 40%, a straight line having the smallest gradient is set as an equivalent line, and difference between the height at a bearing area ratio of 0% and the height at the bearing area ratio of 100% in the equivalent line is a level difference Sk of a core portion. Smr1 represents a bearing area ratio for distinguishing between the core portion and a protruding hill portion having a height greater than or equal to the height of the core portion. Meanwhile, Smr2 represents a bearing area ratio for distinguishing between the core portion and a protruding valley portion having a height less than or equal to the height of the core portion. The surface heights at the bearing area ratios of 20, 40, 60, 80% are represented as BH20, BH40, BH60, BH80, respectively.

Smr1 is preferably 1 to 40% and more preferably 3 to 35%, and may be 10 to 30% depending on cases. BH20 is, for example, preferably 0.04 $\mu$m to 0.5 $\mu$m, more preferably 0.06 $\mu$m to 0.5 $\mu$m, and even more preferably 0.12 $\mu$m to 0.3 $\mu$m. BH80 is, for example, preferably -0.3 $\mu$m to 0 $\mu$m, more preferably -0.3 $\mu$m to -0.05 $\mu$m, and even more preferably -0.25 $\mu$m to -0.12 $\mu$m.

[Fourth embodiment]

FIG. 5 illustrates a cross-section of an example of an antiglare film-attached transparent substrate according to the present embodiment. FIG. 6 illustrates a cross-section of another example of an antiglare film-attached transparent substrate according to the present embodiment. Antiglare film-attached transparent substrates 400 and 500 include the transparent substrates 10, and antiglare films 50 and 60 disposed on the transparent substrates 10. In FIGS. 5 and 6, the antiglare films 50 and 60 are each formed directly on the principal surface 10s of the transparent substrate 10. However, another film may be disposed between the transparent substrate 10 and each of the antiglare films 50 and 60. The antiglare films 50 and 60 each contain the particles 5 and the matrix 2. The antiglare films 50 and 60 may contain voids. The voids may exist in the matrix 2 or exist in contact with the particles 5 and the matrix 2.

The antiglare films 50 and 60 include first regions 50p and 60p and second regions 50v and 60v, respectively. In the first regions 50p and 60p, the particles 5 are stacked in the thickness direction of the antiglare films 50 and 60. According to observation of the antiglare films 50 and 60 from the surface side along the thickness direction, the second regions 50v and 60v surround the first regions 50p and 60p. However, the second regions 50v and 60v may be surrounded by the first regions 50p and 60p. The first regions 50p and 60p and the second regions 50v and 60v are, for example, disposed such that one of the first region 50p, 60p and the second region 50v, 60v is disposed between a plurality of the other regions spaced from each other. This structure may be referred to as a sea-island structure. The second regions 50v and 60v are valley-shaped regions having the surfaces retracted from the surrounding first regions. Therefore, in a case where the island portions are the first regions 50p and 60p, the island portion of the sea-island structure protrudes from the sea portion, and, in a case where the island portions are the second regions 50v and 60v, the island portion is depressed from the sea portion. In the second regions 50v and 60v, the number of the particles 5 stacked is small as compared with the first regions 50p and 60p. The second regions 50v and 60v may include a portion 50t in which the particles 5 are stacked (see FIG. 5). The second regions 50v and 60v may include a portion in which the particles 5 are not stacked or the particles 5 do not exist (see FIGS. 5 and 6). At least a part of the second regions 50v and 60v may be formed of a portion in which the particles 5 are not stacked or the particles 5 do not exist. At least a part of the first regions 50p and 60p, more preferably 50% or more of the first regions 50p and 60p in terms of the number of the first regions may be plateau-shaped regions, or the entirety of the first regions 50p and 60p may be a plateau-shaped region depending cases.

The "plateau-shaped" means that the upper portion of the protrusion of each of the antiglare films 50 and 60 appears to be plateau-shaped when the film is observed by an SEM or the like. Strictly speaking, the "plateau-shaped" means that L2/L1≥0.75, in particular, L2/L1 ≥0.8 is satisfied on the cross-section of the film. As shown in FIG. 7, L1 represents a length at a portion corresponding to 50% of a height H of each protrusion, and L2 represents a length at a portion corresponding to 70% of the height H, preferably, a portion corresponding to 75% of the height H. As shown in FIG. 7, for one L1, L2 may be separately obtained at two or more portions. In this case, L2 is determined as the total of lengths at the two or more portions.

Boundaries 50b and 60b between the first regions 50p and 60p and the second regions 50v and 60v can be determined by average thicknesses T of the antiglare films 50 and 60, respectively (see FIG. 6). The average thickness T can be measured by using a laser microscope as described below. A width Wp of each of the first regions 50p and 60p and a width Wv of each of the second regions 50v and 60v are determined by an interval of each of the boundaries 50b and 60b.

The width Wp may be preferably greater than or equal to 5 μm, more preferably greater than or equal to 7.7 μm, and even more preferably greater than or equal to 10 μm. The width Wv may be greater than or equal to 3.5 μm, preferably greater than or equal to 7 μm, and more preferably greater than or equal to 10 μm. In a case where ·BR>B the width Wp is great, visible light incident on the antiglare film is likely to be directly transmitted, and the haze ratio thus tends to be small. In a case where the width Wv is great, visible light incident on the antiglare film is appropriately scattered, and gloss thus tends to be small. A film in which both the width Wp and the width Wv are greater than or equal to 10 μm is particularly suitable for achieving both a low haze ratio and low gloss.

The first regions 50p and 60p and the second regions 50v and 60v are, for example, each a region extending preferably over 0.25 μm$^2$ or more, more preferably over 0.5 μm$^2$ or more, and particularly preferably over 1 μm$^2$ or more, and may be each a region extending preferably over 5 μm$^2$ or more and more preferably over 10 μm$^2$ or more depending on cases.

The antiglare films 50 and 60 include the first regions 50p and 60p and the second regions 50v and 60v. A proportion of each of the second regions 50v and 60v in an area of a region in which the antiglare film 40 is formed may be, for example, preferably 5 to 90%, more preferably 10 to 70%, and particularly preferably 20 to 50%. The antiglare films 50 and 60 may be merely formed of the first regions 50p and 60p and the second regions 50v and 60v, respectively.

(Particles)

The particles 5 are as described for the third embodiment.

(Matrix)

The matrix 2 is as described for the first to the third embodiments. However, the present embodiment is different from the third embodiment in that promotion of aggregation of the particles 5 through addition of nitrogen atoms is less required in the present embodiment. Therefore, metal oxide such as silicon oxide which forms the matrix 2 is preferably formed of a hydrolyzable organic metal compound, in particular, a compound represented by formula (1). The matrix 2 may be substantially formed of silicon oxide.

(Antiglare film)

In the antiglare films 50 and 60, the ratio of the particles 5 to the matrix 2, the film thickness, Ra of each of surfaces 50s and 60s, and Rsm of each of the surfaces 50s and 60s are not particularly limited, and may be in the ranges described for the first and second embodiments. Difference between the highest portion and the lowest portion of each of the antiglare films 50 and 60 as measured from the principal surface 10s of the transparent substrate 10, may be preferably greater than or equal to three times the average particle diameter of the particles 5 and more preferably greater than or equal to four times the average particle diameter thereof.

(Transparent substrate)

The configuration of the transparent substrate 10 such as a preferable material and structure is as described above.

(Optical characteristics)

Gloss can be evaluated by specular glossiness. 60° specular glossiness of the transparent substrate 10 is, for example, preferably 60 to 130%, more preferably 70 to 120%, and particularly preferably 80 to 110% and 85 to 100%. The specular glossiness represents a value measured for the surface 10s on which the antiglare film 20 is formed. The haze ratio of the transparent substrate is, for example, preferably less than or equal to 20%, more preferably less than or equal to 15%, and particularly preferably less than or equal to 10%, and may be 1 to 8%, more preferably 1 to 6%, and particularly preferably 1 to 5% depending on cases.

The 60° specular glossiness G and the haze ratio H (%) preferably satisfy the relational expression (a), more preferably satisfy the relational expression (b), and even more preferably satisfy the relational expression (c). G and H may satisfy the relational expression (d).

$$H \leq -0.2G+25 \quad (a)$$

$$H \leq -0.2G+24.5 \quad (b)$$

$$H \leq -0.2G+24 \quad (c)$$

$$H \leq -0.15G+18 \quad (d)$$

Japanese Industrial Standards Nos. to be referred to for measuring the gloss and the haze are as described above.

Examples

(Example 1; oriented flat-plate-shaped particles)

In a glass container, 1 g of a smectite dispersion liquid ("LAPONITE" manufactured by BYK) and 120 g of a dispersing agent (liquid obtained by diluting "BYK-102" manufactured by BYK with industrial ethanol (P-7) to 0.15 wt%) were placed and prepared a particulate dispersion liquid with an ultrasonic washing machine. The flat-plate-shaped particles contained in the smectite dispersion liquid had an average diameter of 0.05 $\mu$m and an average thickness of 1 nm. The dispersion medium of the smectite dispersion liquid was water, and the content of the dispersoid was 1 wt%.

2.149 g of propylene glycol monomethyl ether, 0.537 g of propylene glycol, 0.05 g of purified water, 0.125 g of a nitric acid solution (liquid obtained by diluting 60 wt% of concentrated nitric acid with industrial ethanol (P-7) to 0.025 wt%), 0.139 g of tetraethoxysilane, and 1.5 g of the above-described dispersing agent were mixed and aging was performed at room temperature overnight to prepare a matrix precursor liquid. In the matrix precursor liquid, 40 g of the particulate dispersion liquid was mixed and prepared a coating liquid with an ultrasonic washing machine.

A glass sheet (100×100 mm float sheet glass; thickness of 3 mm) was immersed in an aqueous KOH solution having a pH of 13, washed with an ultrasonic washing machine, and dried. By a pipette, 3 g of the coating liquid was taken and applied to the principal surface of the glass sheet by a flow-coating method in which the liquid was caused to flow onto the principal surface of the glass sheet. Thereafter, the obtained product was dried in an oven set to 200°C to obtain an antiglare film-attached transparent substrate.

When the antiglare film-attached transparent substrate was visually observed, no defects were confirmed on the outer appearance. The 60° gloss value measured from the side on which the antiglare film was formed, by using a gloss checker ("gloss checker IG-320" manufactured by HORIBA, Ltd.), was 100.9. The haze ratio measured by using a haze meter ("haze meter NDH-200" manufactured by NIPPON DENSHOKU INDUSTRIES CO., LTD.) was 6.2%. Furthermore, the arithmetic average roughness Ra of a roughness profile which was measured for the surface of the antiglare film by using a laser microscope was 40 nm, and the average length Rsm of the roughness profile elements was 15 $\mu$m. FIG. 5 shows results of observation of the surface of the antiglare film-attached transparent substrate with use of an SEM.

(Example 2; oriented flat-plate-shaped particles)

1.707 g of propylene glycol monomethyl ether, 0.427 g of propylene glycol, 0.03 g of purified water, 0.3 g of a nitric acid solution (liquid obtained by diluting 60 wt% of concentrated nitric acid with industrial ethanol (AP-7) to 0.025 wt%), 0.417 g of tetraethoxysilane, and 0.12 g of a kaolin dispersion liquid ("kaolin TS90" manufactured by Imerys Minerals Japan K. K.) were mixed, and prepared a coating liquid with an ultrasonic washing machine. The average particle diameter of the flat-plate-shaped particles contained in the kaolin dispersion liquid was 0.2 $\mu$m, and the average thickness thereof was 1 nm. The dispersion medium of the kaolin dispersion liquid was industrial ethanol (P-7), and the content of the dispersoid was 10 wt%.

Subsequently, in the same manner as in Example 1, an antiglare film-attached transparent substrate was obtained. When the antiglare film-attached transparent substrate was visually observed, no defects were confirmed on the outer appearance. When the characteristics were measured in the same manner as in Example 1, the 60° gloss value was 92.6, the haze ratio was 4.1%, Ra was 60 nm, and Rsm was 25 $\mu$m.

(Example 3; nitrogen atom-containing matrix)

By using a stirrer, 1.254 g of propylene glycol monomethyl ether, 0.45 g of propylene glycol, 0.225 g of industrial ethanol (P-7), 0.101 g of a nitric acid solution (liquid obtained by diluting 60 wt% of concentrated nitric acid with propylene glycol monomethyl ether to 1 wt%), 0.8 g of a colloidal silica dispersion liquid (liquid obtained by diluting "PGM-AC-4130Y" manufactured by Nissan Chemical Corporation with propylene glycol monomethyl ether to 10 wt%), 0.125 g of tetraethoxysilane, and 0.045 g of $\gamma$-aminopropyltrimethoxysilane (liquid obtained by diluting "KBM-903" manufactured by Shin-Etsu Chemical Co., Ltd. with propylene glycol monomethyl ether to 1 wt%) were mixed for three hours to prepare a coating liquid. The "PGM-AC-4130Y" contained spherical silica particles having an average particle diameter of 40 to 50 nm at a solid content concentration of 30 wt%, and the particles were not aggregated and were each individually dispersed.
In the same manner as in Example 1, an antiglare film-attached transparent substrate was obtained. When the antiglare film-attached transparent substrate was visually observed, no defects were visually confirmed on the outer appearance. When the characteristics were measured in the same manner as in Example 1, the 60° gloss value was 99.2, the haze ratio was 5.5%, Ra was 81 nm, and Rsm was 13.8 $\mu$m.

(Examples 4 to 7; uneven distribution of particles, use of nitrogen atom-containing matrix)

In Examples 4 to 7, antiglare film-attached transparent substrates were obtained in the same manner as in Example 3 except that, in a coating liquid, blending amounts of the nitric acid solution, the colloidal silica dispersion liquid, tetraethoxysilane (TEOS), and $\gamma$-aminopropyltrimethoxysilane (aminosilane) were as indicated in Table 1. When the antiglare film-attached transparent substrates were visually observed, no defects were visually confirmed on the outer appearance. When the characteristics were measured in the same manner as in Example 1, the 60° gloss values were 99.0, 98.2, 110.4, 86.6, the haze ratios (%) were 4.3, 7.1, 4.4, 7.1, Ra (nm) was 92, 80, 92, 89, and Rsm ($\mu$m) was 9.8, 12.0, 17.0, 13.2 in Examples 4 to 7, respectively. Table 2 indicates the results with the measured values in Examples 1 to 3.

[Table 1]

|  | Nitric acid | Colloidal silica | TEOS | Aminosilane |
|---|---|---|---|---|
| Example 3 | 0.101 g | 0.800 g | 0.125 g | 0.045 g |
| Example 4 | 0.127 g | 1.200 g | 0.187 g | 0.090 g |
| Example 5 | 0.285 g | 0.900 g | 0.218 g | 0.358 g |
| Example 6 | 0.285 g | 0.600 g | 0.146 g | 0.358 g |
| Example 7 | 0.390 g | 0.900 g | 0.218 g | 0.537 g |

Next, a parameter about a material ratio curve according to ISO 25178 was examined. A material ratio curve was calculated based on the height data obtained in an observed visual field by a laser microscope ("LMeye7" manufactured by Lasertec Corporation), and, based on the material ratio curve, the level difference Sk of a core portion in the height direction, a bearing area ratio Smr1 for distinguishing between the core portion and the protruding hill portion, a bearing area ratio Smr2 for distinguishing between the core portion and the protruding valley portion, and the surface heights BH20, BH40, BH60, BH80 at the bearing area ratios of 20, 40, 60, 80%, respectively, were obtained. Table 3 indicates the results.

[Table 2]

|  | Gloss | Haze (%) | Ra (nm) | Rsm ($\mu$m) |
|---|---|---|---|---|
| Example 1 | 100.9 | 6.2 | 40 | 15 |
| Example 2 | 92.6 | 4.1 | 60 | 25 |
| Example 3 | 99.2 | 5.5 | 81 | 13.8 |

(continued)

|  | Gloss | Haze (%) | Ra (nm) | Rsm ($\mu$m) |
|---|---|---|---|---|
| Example 4 | 99.0 | 4.3 | 92 | 9.8 |
| Example 5 | 98.2 | 7.1 | 80 | 12.0 |
| Example 6 | 110.4 | 4.4 | 92 | 17.0 |
| Example 7 | 86.6 | 7.1 | 89 | 13.2 |

[Table 3]

|  | Sk/$\mu$m | Smr1/% | Smr2/% | BH20/$\mu$m | BH40/$\mu$m | BH60/$\mu$m | BH80/$\mu$m |
|---|---|---|---|---|---|---|---|
| Example 4 | 0.42 | 22.6 | 91.5 | 0.183 | -0.008 | -0.047 | -0.194 |
| Example 5 | 0.36 | 9.2 | 90.9 | 0.108 | 0.041 | -0.058 | -0.110 |
| Example 6 | 0.10 | 3.8 | 67.7 | 0.068 | 0.048 | -0.014 | -0.080 |
| Example 7 | 0.41 | 19.9 | 91.6 | 0.155 | 0.037 | -0.072 | -0.136 |

In Examples 2, 4, and 7, the 60° specular glossiness G and the haze ratio H (%) satisfied H≤-0.2G+24.5.

Furthermore, when analysis was performed by using an SEM photograph, it was confirmed that, in Examples 1 and 2, the principal surfaces of the flat-plate-shaped particles were substantially parallel to the principal surface of the glass sheet. When the crystal planes of smectite and kaolin oriented along the principal surface of the transparent substrate were confirmed by X-ray diffraction analysis for the antiglare film-attached transparent substrates of Examples 1 and 2, it was confirmed that the crystal planes of both smectite and kaolin were (001) planes.

(Example 8; uneven distribution of particles, presence of first/second regions)

By using a stirrer, 1.960 g of industrial ethanol (P-7), 0.266 g of a liquid obtained by diluting purified water with the above-described P-7 to 10 wt%, 0.101 g of a nitric acid solution (liquid obtained by diluting 60 wt% of concentrated nitric acid with the above-described P-7 to 1 wt%), 0.150 g of a colloidal silica dispersion liquid ("MEK-ST-L" manufactured by Nissan Chemical Corporation), and 0.156 g of tetraethoxysilane were mixed for three hours, to prepare a coating liquid. The "MEK-ST-L" contained spherical silica particles having the average particle diameter of 40 to 50 nm at a solid content concentration of 30 wt%, and the particles were not aggregated and were each individually dispersed, and the dispersion medium was methyl ethyl ketone.

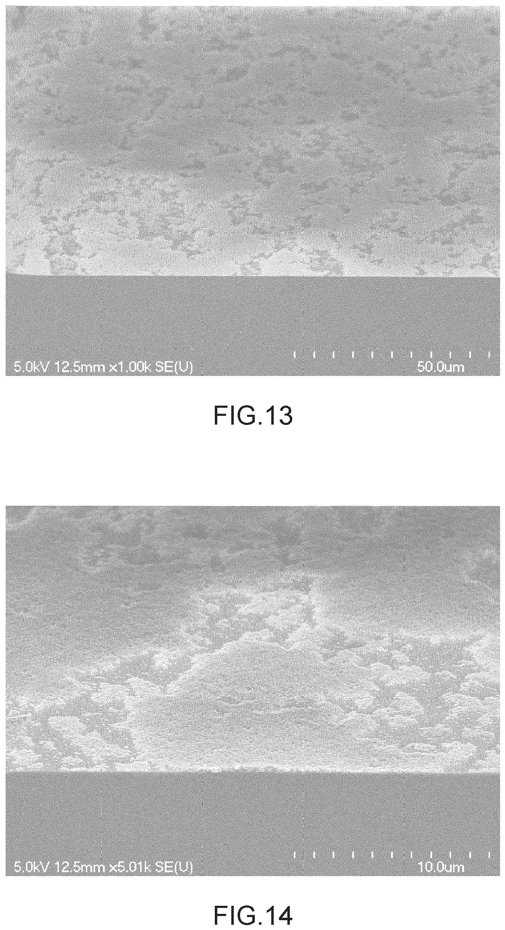

Subsequently, in the same manner as in Example 1, an antiglare film-attached transparent substrate was obtained. When the antiglare film-attached transparent substrate was visually observed, no defects were visually confirmed on the outer appearance. When the characteristics were measured in the same manner as in Example 1, the 60° gloss value was 82.8, and the haze ratio was 4.1 %. FIGS. 13 and 14 show the results of observation of the surface of the antiglare film-attached transparent substrate with use of an SEM.

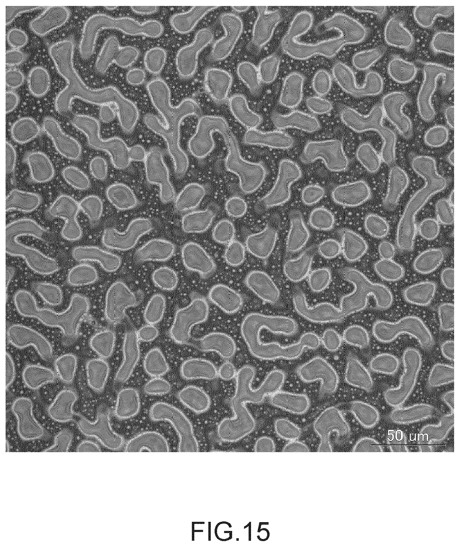

The film surface was observed by a microscope with use of the above-described laser microscope. Thus, three-dimensional image data, including height data, of the shape of the film surface was obtained. At this time, the optical magnification was set to 50x magnification. The visual field range of the obtained image corresponded to a 300 $\mu$m$\times$300 $\mu$m square shape, and the resolution was 1024 pixels $\times$ 1024 pixels. FIG. 15 shows the microscope photograph thereof. In FIG. 15, the second region depressed to form a valley-like shape surrounded a plurality of first regions protruding to form plateau-like shapes.

From the three-dimensional image data, the width of the first region (plateau-shaped region) and the width of the second region (valley-shaped region) were obtained as follows. An evaluation target line for evaluating the height data was determined, and the plateau-shaped regions and the valley-shaped regions were determined at the evaluation target line while the image data was observed, and the width of each plateau-shaped region and the width of each valley-shaped region were measured. In a case where the plateau-shaped region and the valley-shaped region were not able to be distinguished from each other through the observation of the image data, the cross-sectional height profile at the evaluation target line was obtained, and a portion higher than the reference line was determined as the plateau-shaped region, and a portion lower than the reference line was determined as the valley-shaped region, and the lengths thereof were measured. The reference line was set so as to have an arithmetic average height of the height data in at least 1/4 of the range, in the length direction, of the cross-sectional height profile. The average thickness T (see FIG. 7) was determined by the reference line. In any case, nine evaluation target lines were determined as straight lines equally spaced from each other in one visual field in microscope observation, and the arithmetic averages for the obtained widths Wp of the first regions and the obtained widths Wv of the second regions were obtained, to determine Wp and Wv of the measured film. As a result, Wp was 13.7 $\mu$m and Wv was 17.3 $\mu$m.

(Example 9; uneven distribution of particles, presence of first/second regions)

By using a stirrer, 2.319 g of industrial ethanol (P-7), 0.158 g of a liquid obtained by diluting purified water with the above-described P-7 to 10 wt%, 0.101 g of a nitric acid solution (liquid obtained by diluting 60 wt% of concentrated nitric acid with the above-described P-7 to 1 wt%), 0.090 g of a colloidal silica dispersion liquid ("MEK-ST-L" manufactured by Nissan Chemical Corporation), and 0.094 g of tetraethoxysilane were mixed for three hours, to prepare a coating liquid.
Subsequently, in the same manner as in Example 1, an antiglare film-attached transparent substrate was obtained. When the antiglare film-attached transparent substrate was visually observed, no defects were visually confirmed on the outer appearance. When the characteristics were measured in the same manner as in Example 1, the 60° gloss value was 94.1, and the haze ratio was 4.7%. The width Wp of the first region and the width Wv of the second region were obtained in the same manner as in Example 8. As a result, Wp was 9.6 $\mu$m and Wv was 20.3 $\mu$m.

(Example 10; uneven distribution of particles, presence of first/second regions)

By using a stirrer, 1.776 g of propylene glycol monomethyl ether, 0.45 g of propylene glycol, 0.101 g of a nitric acid solution (liquid obtained by diluting 60 wt% of concentrated nitric acid with propylene glycol monomethyl ether to 1 wt%), 0.150 g of a colloidal silica dispersion liquid ("MEK-ST-L" manufactured by Nissan Chemical Corporation), and 0.150 g of tetraethoxysilane were mixed for three hours, to prepare a coating liquid.
Subsequently, in the same manner as in Example 1, an antiglare film-attached transparent substrate was obtained. When the antiglare film-attached transparent substrate was visually observed, no defects were visually confirmed on the outer appearance. When the characteristics were measured in the same manner as in Example 1, the 60° gloss value was 98.4 and the haze ratio was 4.9%. The width Wp of the first region and the width Wv of the second region were obtained in the same manner as in Example 8. As a result, Wp was 6.8 $\mu$m and Wv was 4.8 $\mu$m.

(Example 11; uneven distribution of particles, presence of first/second regions)

By using a stirrer, 1.776 g of propylene glycol monomethyl ether, 0.45 g of propylene glycol, 0.225 g of industrial ethanol (P-7), 0.127 g of a nitric acid solution (liquid obtained by diluting 60 wt% of concentrated nitric acid with propylene glycol monomethyl ether to 1 wt%), 0.800 g of a colloidal silica dispersion liquid (liquid obtained by diluting "PGM-AC-4130Y" manufactured by Nissan Chemical Corporation with propylene glycol monomethyl ether to 10 wt%), and 0.125 g of tetraethoxysilane were mixed for three hours, to prepare a coating liquid.
Subsequently, in the same manner as in Example 1, an antiglare film-attached transparent substrate was obtained. When the antiglare film-attached transparent substrate was visually observed, no defects were visually confirmed on the outer appearance. When the characteristics were measured in the same manner as in Example 1, the 60° gloss value was 106.6 and the haze ratio was 4.4%. The width Wp of the first region and the width Wv of the second region were obtained in the same manner as in Example 8. As a result, Wp was 5.0 $\mu$m and Wv was 1.7 $\mu$m.
Table 4 collectively indicates the results of Examples 8 to 11.

[Table 4]

|  | Gloss | Haze (%) | Wp ($\mu$m) | Wv ($\mu$m) |
|---|---|---|---|---|
| Example 8 | 82.8 | 4.1 | 13.7 | 17.3 |
| Example 9 | 94.1 | 4.7 | 9.6 | 20.3 |
| Example 10 | 98.4 | 4.9 | 6.8 | 4.8 |
| Example 11 | 106.6 | 4.4 | 5.0 | 1.7 |

In Examples 8, 9, the 60° specular glossiness G and the haze ratio H (%) satisfied H$\leq$-0.2G+24. In Example 8, the relationship of H$\leq$-0.15G+18 was also satisfied.

**Claims**

1. An antiglare film-attached transparent substrate comprising:

   a transparent substrate; and
   an antiglare film disposed on the transparent substrate, wherein
   the antiglare film contains particles and a matrix, and
   the matrix contains silicon oxide.

2. The antiglare film-attached transparent substrate according to claim 1, wherein the antiglare film incudes a first region in which the particles are stacked in a thickness direction of the film, and a valley-shaped second region that surrounds the first region or that is surrounded by the first region.

3. The antiglare film-attached transparent substrate according to claim 2, wherein the first region is a plateau-shaped region.

4. The antiglare film-attached transparent substrate according to claim 2 or 3, wherein the second region includes a portion in which the particles are not stacked, or the particles do not exist.

5. The antiglare film-attached transparent substrate according to any one of claims 2 to 4, wherein

   a width of the first region is greater than or equal to 7.7 μm, and
   a width of the second region is greater than or equal to 7 μm.

6. The antiglare film-attached transparent substrate according to claim 5, wherein

   the width of the first region is greater than or equal to 10 μm, and
   the width of the second region is greater than or equal to 10 μm.

7. The antiglare film-attached transparent substrate according to claim 1, wherein

   the particles are substantially formed of flat-plate-shaped particles,
   a thickness of each of the flat-plate-shaped particles is in a range of 0.3 nm to 3 nm, and an average diameter of principal surfaces of the flat-plate-shaped particles is in a range of 10 nm to 1000 nm, and
   the principal surfaces of the flat-plate-shaped particles are disposed substantially parallel to a principal surface of the transparent substrate.

8. The antiglare film-attached transparent substrate according to claim 7, wherein the flat-plate-shaped particles are phyllosilicate mineral particles.

9. The antiglare film-attached transparent substrate according to claim 1, wherein

   the particles are substantially formed of phyllosilicate mineral particles, and
   in phyllosilicate mineral contained in the phyllosilicate mineral particles, a crystal plane oriented along a principal surface of the transparent substrate is a (001) plane.

10. The antiglare film-attached transparent substrate according to claim 8 or 9, wherein the phyllosilicate mineral particles contain a mineral belonging to smectite, kaolin, or talc.

11. The antiglare film-attached transparent substrate according to claim 1, wherein the matrix contains a nitrogen atom.

12. The antiglare film-attached transparent substrate according to claim 11, wherein the antiglare film includes a region in which the particles are stacked in a thickness direction of the film, and a region in which the particles are not stacked or the particles do not exist.

13. The antiglare film-attached transparent substrate according to claim 11 or 12, wherein difference between a highest portion and a lowest portion of the antiglare film as measured from a principal surface of the transparent substrate is greater than or equal to three times an average particle diameter of the particles.

**14.** The antiglare film-attached transparent substrate according to any one of claims 11 to 13, wherein Smr1 defined in ISO 25178 is 10 to 30%.

**15.** The antiglare film-attached transparent substrate according to any one of claims 11 to 14, wherein a surface height BH20 obtained when a bearing area ratio defined in ISO 25178 is 20% is in a range of 0.04 $\mu$m to 0.5 $\mu$m.

**16.** The antiglare film-attached transparent substrate according to any one of claims 11 to 15, wherein a surface height BH80 obtained when a bearing area ratio defined in ISO 25178 is 80% is in a range of -0.3 $\mu$m to 0 $\mu$m.

**17.** The antiglare film-attached transparent substrate according to any one of claims 2 to 6 and 11 to 16, wherein a material of the particles contains silicon oxide.

**18.** The antiglare film-attached transparent substrate according to any one of claims 2 to 6 and 11 to 17, wherein the particles are substantially formed of spherical particles.

**19.** The antiglare film-attached transparent substrate according to any one of claims 1 to 18, wherein a surface of the antiglare film has Rsm of greater than 0 $\mu$m and less than or equal to 35 $\mu$m when the Rsm represents an average length of roughness profile elements as defined in JIS B0601:2001.

**20.** The antiglare film-attached transparent substrate according to any one of claims 1 to 19, wherein Ra of a surface of the antiglare film is in a range of 20 nm to 120 nm when the Ra represents an arithmetic average roughness of a roughness profile as defined in JIS B0601:2001.

**21.** The antiglare film-attached transparent substrate according to any one of claims 1 to 20, wherein a principal surface of the transparent substrate has Ra of less than or equal to 10 nm when the Ra represents an arithmetic average roughness of a roughness profile as defined in JIS B0601:2001.

**22.** The antiglare film-attached transparent substrate according to any one of claims 1 to 21, wherein 60° specular glossiness is 60 to 130%.

**23.** The antiglare film-attached transparent substrate according to any one of claims 1 to 22, wherein a haze ratio is less than or equal to 20%.

**24.** The antiglare film-attached transparent substrate according to claim 23, wherein the haze ratio is less than or equal to 8%.

**25.** The antiglare film-attached transparent substrate according to any one of claims 1 to 24, wherein 60° specular glossiness G and a haze ratio H (%) satisfy a relationship described below,

$$H \leq -0.2G + 25.$$

**26.** The antiglare film-attached transparent substrate according to claim 25, wherein the 60° specular glossiness G and the haze ratio H (%) satisfy a relationship described below,

$$H \leq -0.2G + 24.$$

**27.** The antiglare film-attached transparent substrate according to claim 26, wherein the 60° specular glossiness G and the haze ratio H (%) satisfy a relationship described below,

$$H \leq -0.15G + 18.$$

FIG.1

FIG.2

FIG.3

300

FIG.4

FIG.5

FIG.6

FIG.7

5.0kV 8.5mm x20.0k SE(U)　　　　　　2.00μm

FIG.8

5.0kV 7.5mm x20.0k SE(U)　　　　　2.00μm

FIG.9

5.0kV 7.6mm x20.0k SE(U)　　　　　2.00μm

FIG.10

5.0kV 7.7mm x20.0k SE(U)    2.00μm

FIG.11

5.0kV 8.0mm x20.0k SE(U)    2.00μm

FIG.12

5.0kV 12.5mm x1.00k SE(U)                                    50.0um

FIG.13

5.0kV 12.5mm x5.01k SE(U)                                    10.0um

FIG.14

FIG.15

## INTERNATIONAL SEARCH REPORT

| International application No. |
|---|
| PCT/JP2021/010462 |

**A. CLASSIFICATION OF SUBJECT MATTER**
Int.Cl. B32B9/00(2006.01)i, G02B5/02(2006.01)i, B32B7/023(2019.01)i
FI: G02B5/02C, B32B7/023, B32B9/00A

According to International Patent Classification (IPC) or to both national classification and IPC

**B. FIELDS SEARCHED**

Minimum documentation searched (classification system followed by classification symbols)
Int.Cl. B32B9/00, G02B5/02, B32B7/023

Documentation searched other than minimum documentation to the extent that such documents are included in the fields searched
Published examined utility model applications of Japan    1922–1996
Published unexamined utility model applications of Japan    1971–2021
Registered utility model specifications of Japan    1996–2021
Published registered utility model applications of Japan    1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/029735 A1 (ASAHI GLASS CO., LTD.) 23 February 2017 (2017-02-23), paragraphs [0020], [0033], [0037], [0046], [0050], [0142]-[0149], fig. 1 | 1-3, 7, 11, 17, 21, 25-27 |
| Y | | 4-6, 8-10, 12-16, 19-20 |
| X | JP 2019-144475 A (AGC INC.) 29 August 2019 (2019-08-29), paragraphs [0049]-[0070], [0090], [0091], [0107], [0112], [0124], [0125] | 1-3, 7, 17-18, 21 |
| Y | | 4-6, 8-12, 14-16, 19-20 |
| X | JP 2019-215448 A (NIPPON SHEET GLASS CO., LTD.) 19 December 2019 (2019-12-19), paragraphs [0023], [0051], fig. 1 | 1-3, 17, 19-24 |
| Y | | 4-6, 11-12 |
| Y | JP 2011-81118 A (TOPPAN PRINTING CO., LTD.) 21 April 2011 (2011-04-21), fig. 2(a), (b) | 4, 12 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 April 2021 | 11 May 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2021/010462 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2018-77279 A (FUKUVI CHEMICAL INDUSTRY CO., LTD.) 17 May 2018 (2018-05-17), paragraph [0015] | 5-6, 13, 19-20 |
| Y | JP 2017-134094 A (ASAHI GLASS CO., LTD.) 03 August 2017 (2017-08-03), paragraphs [0020], [0024], [0025] | 8-10 |
| Y | JP 2013-228720 A (FUJIFILM CORPORATION) 07 November 2013 (2013-11-07), paragraph [0049] | 9 |

Form PCT/ISA/210 (second sheet) (January 2015)

**INTERNATIONAL SEARCH REPORT**
Information on patent family members

International application No.

PCT/JP2021/010462

```
WO 2017/029735 A1  23 February 2017    (Family: none)

JP 2019-144475 A   29 August 2019      US 2019/0256410 A1
                                       paragraphs [0094]-[0134],
                                       [0167]-[0170], [0205],
                                       tables 2, 7
                                       DE 102019001209 A
                                       CN 110187422 A

JP 2019-215448 A   19 December 2019    (Family: none)

JP 2011-81118 A    21 April 2011       (Family: none)

JP 2018-77279 A    17 May 2018         EP 3505979 A1
                                       paragraphs [0023]-[0027]
                                       TW 201829174 A
                                       CN 109791222 A
                                       KR 10-2019-0079611 A

JP 2017-134094 A   03 August 2017      (Family: none)

JP 2013-228720 A   07 November 2013    US 2013/0258481 A1
                                       paragraph [0073]
                                       CN 103364849 A
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017134094 A